# EUROPEAN PATENT SPECIFICATION

(11) **EP 2 295 470 B1**
(45) Date of publication and mention of the grant of the patent: **18.06.2014**
(21) Application number: 09773442.0
(22) Date of filing: 29.06.2009
(51) Int. Cl.: C08B 13/00, C08K 3/12, C08K 3/26, C08K 3/34, C08L 1/10, C08L 1/32, C08B 11/20

(54) **CELLULOSE DERIVATIVE AND PROCESS FOR PRODUCTION THEREOF, CELLULOSE RESIN COMPOSITION, MOLDED ARTICLE AND METHOD FOR PRODUCTION THEREOF, AND HOUSING FOR ELECTROCHEMICAL DEVICE**
ZELLULOSEDERIVAT UND VERFAHREN ZU SEINER HERSTELLUNG, ZELLULOSEHARZZUSAMMENSETZUNG, FORMARTIKEL UND VERFAHREN ZU SEINER HERSTELLUNG SOWIE GEHÄUSE FÜR EINE ELEKTROCHEMISCHE VORRICHTUNG
DÉRIVÉ DE CELLULOSE ET PROCÉDÉ DE FABRICATION DE CELUI-CI, COMPOSITION DE RÉSINE DE CELLULOSE, ARTICLE MOULÉ ET PROCÉDÉ DE FABRICATION DE CELUI-CI ET RÉCEPTACLE POUR UN DISPOSITIF ÉLECTROCHIMIQUE

(30) Priority: 30.06.2008 JP 2008171667; 16.02.2009 JP 2009032827; 31.03.2009 JP 2009088520
(43) Date of publication of application: 16.03.2011
(73) Proprietor: FUJIFILM Corporation, Tokyo 106-0031 (JP)
(72) Inventor: YOSHITANI, Toshihide, Minami-Ashigara-shi Kanagawa (JP); NOZOE, Yutaka, Minami-Ashigara-shi Kanagawa (JP); SAWAI, Daisuke, Minami-Ashigara-shi Kanagawa (JP)
(74) Representative: Grünecker, Kinkeldey, Stockmair & Schwanhäusser
(86) International application number: PCT/JP2009/061871
(87) International publication number: WO 2010/001864

(56) References cited:
- JP-A- 4 033 901
- JP-A- 5 125 224
- JP-A- 11 035 601
- JP-A- 52 023 186
- JP-A- 2005 194 302
- JP-T- 2001 509 835
- JP-T- 2006 520 420
- US-A- 3 435 027
- US-A- 4 362 868
- US-A- 4 362 868

## Description

The present invention relates to a novel cellulose derivative and a method for producing such a derivative, a cellulose resin composition, molded matter and a method for making such matter, and an electrical and electronic equipment housing.

In members that make up electrical and electronic equipment, such as a copying machine or a printer, various kinds of materials are used with consideration given e.g. to properties and functions required of the members. For instance, a large quantity of PC (Polycarbonate), ABS (Acrylonitrile-butadiene-styrene) resin or PC/ABS resin is generally used in a member (housing) to perform functions of accommodating a driving machine of electrical and electronic equipment and protecting the driving machine (Patent Document 1). Those resins are manufactured through reactions of compounds derived from petroleum.

By the way, fossil resources such as petroleum, coal and natural gas are mainly composed of carbon which had been fixed in the earth for a great many years. When such fossil resources or products derived from fossil resources are burnt to result in the release of carbon dioxide into the atmosphere, the carbon absent primarily in the atmosphere but fixed in deep underground comes to be abruptly released in the form of carbon dioxide, and thereby a great increase in carbon dioxide concentration of the atmosphere is brought on and becomes a cause of global warming. Reduction in usage of polymers, such as ABS and PC, which are derived from petroleum as a fossil resource, is therefore desired from the viewpoint of preventing global warming despite excellent properties of the polymers as materials of members for electrical and electronic equipment.

On the other hand, resins of plant origin are produced by photosynthetic reaction which plants perform through the use of carbon dioxide in the atmosphere and water. Therefore there is a view that the burning of resins of plant origin is plus or minus zero in carbon dioxide balance in the atmosphere and causes no increase in total amount of CO₂ in the atmosphere because, even when carbon dioxide is evolved by the burning of such resins, the carbon dioxide evolved is the equivalent of carbon dioxide originally present in the atmosphere. From such a view, the resins of plant origin are referred to as the so-called "carbon neutral" materials. The use of carbon neutral materials as alternatives to resins of petroleum origin has become an urgent necessity from the standpoint of controlling recent global warming.

Under the circumstances, in the case of PC polymers, there is a suggestion about the method of reducing usage of resources of petroleum origin by using resources of plant origin, including starch, as part of the raw materials of petroleum origin (Patent Document 2). However, from the viewpoint of aiming for more complete carbon neutral materials, further improvements are sought.

### Patent Documents

Patent Document 1: JP-A No. 56-55425
Patent Document 2: JP-A No. 2008-24919

As inventors we have focused attention on the use of cellulose as a carbon neutral resin earlier than anyone else. However, cellulose is difficult to shape by application of heat and unsuitable for mold working because it generally has no thermal plasticity. Even if thermal plasticity can be imparted to cellulose, there comes up a problem of inducing a great decline in strength including impact resistance. Further, cellulose has room for improvement in heat resistance also.

An object of the invention is to provide a cellulose derivative and a resin composition which each have good thermal plasticity, strength and heat resistance, and are suitable for mold working.

The inventors have focused attention on the molecular structure of cellulose, and have found that conversion of the cellulose into a cellulose derivative having a specific structure allows manifestations of good thermal plasticity, impact resistance and heat resistance, thereby achieving the invention.

More specifically, resolution of the problems can be achieved by embodiments of the invention as claimed in claims 1-14.

The present cellulose derivative or the present resin composition can be made into molded matter because of its excellent thermal plasticity. In addition, the molded matter made from the present cellulose derivative or resin composition has good impact resistance and heat resistance, and it can therefore be used suitably as components of automobiles, household electrical appliances, electrical and electronic equipment, machine parts, housing and building materials. Moreover, the present cellulose derivative is a resin of plant origin, and it is therefore a material contributable to control of global warming and can be substituted for petroleum-derived resins currently in use.

### Detailed description of the invention is given below.

### 1. Cellulose Derivative

In the present cellulose derivative according to claim 1, hydrocarbyl groups ranging in carbon number from 1 to 7 and branched aliphatic acyl groups ranging in carbon number from 7 to 9 substitute for at least part of the hydrogen atoms of hydroxyl groups contained in cellulose {(C₆H₁₀O₅)n}.

In the cellulose derivative according to claim 2, methyl groups and branched aliphatic acyl groups ranging in carbon number from 4 to 11 substitute for at least part of the hydrogen atoms of hydroxyl groups contained in cellulose, wherein a degree of substitution of the aliphatic acyl group is from 0.3 to 1.5.

More specifically, the present cellulose derivative has repeating units represented by the following formula (1).

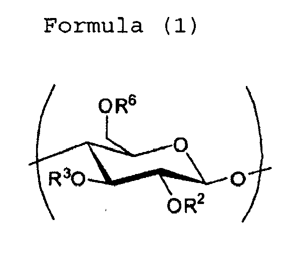

In the formula (1), each of R², R³ and R⁶ independently represents a hydrogen atom, a hydrocarbyl group or an aliphatic acyl group as defined above. However, at least part of R², R³ and R⁶ represent said hydrocarbyl groups and at least another part of R², R³ and R⁶ represent said aliphatic acyl groups.

The present cellulose derivative can exhibit thermal plasticity through the etherification and esterification of at least part of hydroxyl groups in the β-glucose rings by hydrocarbyl groups having the specified carbon numbers, and it therefore has suitability for mold working. In addition, the present cellulose derivative can exhibit high strength and heat resistance when made into molded matter too. Moreover, because cellulose is a perfect plant-derived ingredient, it is a carbon neutral material and can greatly contribute to reduction in environmental load.

Additionally, the term "cellulose" as used in the invention means a high-molecular compound which is made up of a great number of glucose linking together via β-1, 4-glycoside bonding, and besides, which has undergone no substitution for hydroxyl groups attached to the carbon atoms in the 2-, 3- and 6-positions of the glucose rings.

In addition, the expression of "hydroxyl groups contained in cellulose" refers to the hydroxyl groups attached to the carbon atoms in the 2-, 3- and 6-positions of the glucose rings in cellulose.

It is only essential that the present cellulose derivatives contain, in some part of the whole, hydrocarbyl groups and aliphatic acyl groups having the carbon numbers specified respectively. And the present cellulose derivative may be made up of the same type of repeating units or it may be made up of two or more types of repeating units. Further, it is not necessary for the present cellulose derivative to contain both of the hydrocarbyl group and the aliphatic acyl group in each of its repeating units.

For instance, the present cellulose derivative may be (1) a cellulose derivative made up of repeating units each of which substitutes the hydrocarbyl group or groups for any of R², R³ and R⁶ and repeating units each of which substitutes the aliphatic acyl group or groups for any of R², R³ and R⁶, or it may be (2) a cellulose derivative made up of single-type repeating units each of which substitutes both of the hydrocarbyl group and the aliphatic acyl group for any of R², R³ and R⁶.

Further, the present cellulose derivative may be (3) a cellulose derivative in which repeating units represented by the formula (1) but in varieties are linked at random.

Additionally, unsubstituted repeating units (namely, repeating units which each have hydrogen atoms as all of R², R³ and R⁶ in the formula (1)) may be present in part of the cellulose derivative.

The hydrocarbyl group may be either an aliphatic group or an aromatic group. The aliphatic group may be any of straight-chain, branched and cyclic groups, and may have an unsaturated bond. Examples of such an aliphatic group include an alkyl group, a cycloalkyl group, an alkenyl group and an alkynyl group. Examples of the aromatic group include a phenyl group, a naphthyl group, a phenanthryl group and an anthryl group.

The hydrocarbyl group is preferably an aliphatic group having a carbon number of 1 to 4 in the case of the cellulose derivative of claim 1.

Suitable examples of an aliphatic group having a carbon number of 1 to 7 include a methyl group, an ethyl group, a propyl group, an isopropyl group, a butyl group, an isobutyl group, a pentyl group, a hexyl group and a heptyl group. Of these groups, a methyl group and an ethyl group are preferable to the others, and a methyl group is far preferred. One type of these hydrocarbyl groups may be incorporated alone, or two or more types of them may be incorporated in combination.

As to the aliphatic acyl group , the carbon number is preferably from 7 to 9, far preferably 8. Examples of an aliphatic group in the aliphatic acyl group having a carbon number of 4 to 11 include an alkyl group, a cycloalkyl group, an alkenyl group and an alkynyl group. The aliphatic group is preferably an alkyl group.

Examples of the aliphatic acyl group having a carbon number of 4 to 11 include a butanoyl (butyryl) group, an isobutyryl group, a pentanoyl group, a 2-methylbutanoyl group, a 3-methylbutanoyl group, a pivaloyl group, a hexanoyl group, a 2-methylpentanoyl group, a 3-methylpentanoyl group, a 4-methylpentanoyl group, a 2,2-dimethylbutanoyl group, a 2,3-dimethylbutanoyl group, a 3,3-dimethylbutanoyl group, a 2-ethylbutanoyl group, a heptanoyl group, a 2-methylhexanoyl group, a 3-methylhexanoyl group, a 4-methylhexanoyl group, a 5-methylhexanoyl group, a 2,2-dimethylpentanoyl group, a 2,3-dimethylpentanoyl group, a 3,3-dimethylpentanoyl group, a 2-ethylpentanoyl group, a cyclohexanoyl group, an octanoyl group, a 2-methylheptanoyl group, a 3-methylheptanoyl group, a 4-methylheptanoyl group, a 5-methylheptanoyl group, a 6-methylheptanoyl group, a 2,2-dimethylhexanoyl group, a 2,3-dimethylhexanoyl group, a 3,3-dimethylhexanoyl group, a 2-ethylhexanoyl group, a 2-propylpentanoyl group, a nonanoyl group, a 2-methyloctanoyl group, a 3-methyloctanoyl group, a 4-methyloctanoyl group, a 5-methyloctanoyl group, a 6-methyloctanoyl group, a 2,2-dimethylheptanoyl group, a 2,3-dimethylheptanoyl group, a 3,3-dimethylheptanoyl group, a 2-ethylheptanoyl group, a 2-propylhexanoyl group, a 2-butylpentanoyl group, a decanoyl group, a 2-methylnonanoyl group, a 3-methylnonanoyl group, a 4-methylnonanoyl group, a 5-methylnonanoyl group, a 6-methylnonanoyl group, a 7-methylnonanoyl group, a 2,2-dimethyloctanoyl group, a 2,3-dimethyloctanoyl group, a 3,3-dimethyloctanoyl group, a 2-ethyloctanoyl group, a 2-propylheptanoyl group, a 2-butylhexanoyl group and a 2-propyloctanoyl group. One type of these groups may be incorporated alone, or two or more types of them may be incorporated in combination.

The branched aliphatic moiety of the aliphatic acyl group preferably has a branched structure at the α-position of the carbonyl group. By having such a branched structure, the cellulose derivative can obtain an improvement in strength such as impact resistance.

As an aliphatic acyl group having a branched aliphatic moiety, a 2-propylpentanoyl group, a 2-ethylhexanoyl group, a 2-methylheptanoyl group is especially suitable.

The hydrocarbyl group and the aliphatic acyl group, though they may be unsubstituted groups or they may further have substituents, are preferably unsubstituted groups. Examples of substituents those groups may further have included a hydroxy group, a mercapto group, a halogen atom (such as a fluorine atom, a chlorine atom, a bromine atom or an iodine atom), a cyano group, a sulfo group, a carboxyl group, a nitro group, a hydroxamic acid group, a sulfino group, a hydrazino group and an imino group.

In a case where the aliphatic acyl group further has a substituent, and besides, the substituent contains carbon, the number of carbon atoms in the substituent shall be counted out of the number of carbon atoms the aliphatic acyl group has.

The cellulose derivative is not particularly restricted as to the substitution positions of hydrocarbyl groups and aliphatic acyl groups and the numbers of hydrocarbyl groups and aliphatic acyl groups per β-glucose ring unit (degrees of substitution).

For instance, the degree of hydrocarbyl group substitution, DS_{B} (the number of hydrocarbyl groups substituting for the hydroxyl groups in the 2-, 3- and 6-positions of β-glucose ring in each repeating unit), is preferably 1.0 or above, far preferably from 1.5 to 2.5.

The degree of aliphatic acyl group substitution, DS_{C} (the number of aliphatic acyl groups substituting for the hydroxyl groups in the 2-, 3- and 6-positions of the cellulose structure β-glucose ring in each repeating unit), is preferably 0.1 or above, far preferably from 0.3 to 1.5. By adjusting the substitution degrees to such ranges, improvements in heat resistance and brittleness can be attained.

In addition, there is no particular restriction on the number of hydroxyl groups which are present in the cellulose derivative without undergoing substitution.

The degree of hydrogen atom substitution, DS_{A} (the substitution-free rate of hydroxyl groups in the 2-, 3- and 6-positions in each repeating unit) is preferably from 0.01 to 1.5, far preferably from 0.2 to 1.2. By adjusting the DS_{A} to 0.01 or above, the flowability of the resin composition can be enhanced. By adjusting the DS_{A} to 1.5 or below, on the other hand, not only the flowability of the resin composition can be enhanced, but also acceleration of thermal decomposition, occurrence of foaming due to absorption of water by the resin composition at the time of molding, and so on can be inhibited.

Additionally, the sum total of these degrees of substitution (DS_{A}+DS_{B}+DS_{C}) is 3.

The molecular weight of the present cellulose derivative is preferably from 5×10³ to 1,000×10³, far preferably from 10×10³ to 500×10³, further preferably from 100×10³ to 200×10³, in terms of number-average molecular weight (Mn), while it is preferably from 7×10³ to 5,000×10³, far preferably from 15×10³ to 2,500×10³, further preferably from 300×10³ to 1,500×10³, in terms of weight-average molecular weight (Mw). The molecular-weight distribution (MWD) is preferably from 1.1 to 5.0, far preferably from 1.5 to 3.5. By adjusting the cellulose derivative to have the average molecular weights in the ranges specified above, moldability and mechanical strength of the molded matter, and so on can be improved. In addition, by adjusting the molecular weight distribution to the above range, the molding properties and so on can be enhanced.

Number-average molecular weight (Mn), weight-average molecular weight (Mw) and molecular-weight distribution (MWD) measurements in the invention can be performed by use of gel permeation chromatography (GPC). More specifically, these values can be determined by the use of tetrahydrofuran as a solvent, polystyrene gel and a reduced molecular weight calibration curve plotted in advance from a composition curve of standard monodisperse polystyrene samples.

### 2. Method of Producing Cellulose Derivative

The present cellulose derivative has no particular restriction as to the production method thereof, and it can be produced by using cellulose as a starting material and subjecting the cellulose to etherification and esterification. Raw materials of the cellulose are not limited to particular ones, but any of cotton, linters, and pulp can be cited as examples thereof.

In a preferred embodiment of the production method is included a process of esterifying cellulose ether (a cellulose derivative prepared by substitution of hydrocarbyl groups for at least part of hydrogen atoms of hydroxyl groups in the 2-, 3- and 6-positions of β-glucose rings) through the reaction with an acid chloride or an acid anhydride in the presence of a base.

The cellulose ether used therein is e.g. cellulose ether prepared by substitution of hydrocarbyl groups from 1 to 7 in number of carbon atoms for hydrogen atoms of hydroxyl groups contained in cellulose.

Examples of such cellulose ether include methyl cellulose, ethyl cellulose, propyl cellulose, butyl cellulose, allyl cellulose and benzyl cellulose.

The acid chloride used therein is e.g. a carboxylic acid chloride having a carbon number of 4 to 11. Examples of such a carboxylic acid chloride having a carbon number of 4 to 11 include butyryl chloride, isobutyryl choride, pentanoyl chloride, 2-methylbutanoyl chloride, 3-methylbutanoyl chloride, pivaloyl chloride, hexanoyl chloride, 2-methylpentanoyl chloride, 3-methylpentanoyl chloride, 4-methylpentanoyl chloride, 2,2-dimethylbutanoyl chloride, 2,3-dimethylbutanoyl chloride, 3,3-dimethylbutanoyl chloride, 2-ethylbutanoyl chloride, heptanoyl chloride, 2-methylhexanoyl chloride, 3-methylhexanoyl chloride, 4-methylhexanoyl chloride, 5-methylhexanoyl chloride, 2,2-dimethylpentanoyl chloride, 2,3-dimethylpentanoyl chloride, 3,3-dimethylpentanoyl chloride, 2-ethylpentanoyl chloride, cyclohexanoyl chloride, octanoyl chloride, 2-methylheptanoyl chloride, 3-methylheptanoyl chloride, 4-methylheptanoyl chloride, 5-methylheptanoyl chloride, 6-methylheptanoyl chloride, 2,2-dimethylhexanoyl chloride, 2,3-dimethylhexanoyl chloride, 3,3-dimethylhexanoyl chloride, 2-ethylhexanoyl chloride, 2-propylpentanoyl chloride, nonanoyl chloride, 2-methyloctanoyl chloride, 3-methyloctanoyl chloride, 4-methyloctanoyl chloride, 5-methyloctanoyl chloride, 6-methyloctanoyl chloride, 2,2-dimethylheptanoyl chloride, 2,3-dimethylheptanoyl chloride, 3,3-dimethylheptanoyl chloride, 2-ethylheptanoyl chloride, 2-propylhexanoyl chloride, 2-butylpentanoyl chloride, decanoyl chloride, 2-methylnonanoyl chloride, 3-methylnonanoyl chloride, 4-methylnonanoyl chloride, 5-methylnonanoyl chloride, 6-methylnonanoyl chloride, 7-methylnonanoyl chloride, 2,2-dimethyloctanoyl chloride, 2,3-dimethyloctanoyl chloride, 3,3-dimethyloctanoyl chloride, 2-ethyloctanoyl chloride, 2-propylheptanoyl chloride and 2-butylhexanoyl chloride.

The acid anhydride used is e.g. a carboxylic anhydride derived from a carboxylic acid having a carbon number of 4 to 11. Examples of such a carboxylic anhydride include butyric anhydride, valeric anhydride, hexanoic anhydride, heptanoic anhydride, octanoic anhydride, 2-ethylhexanoic anhydride and nonanoic anhydride.

As the base, pyridine, lutidine, dimethylaminopyridine, triethylamine, diethylbutylamine, diazabicycloundecene or potassium carbonate can be used. Of these bases, pyridine and dimethylaminopyridine are preferable to the others.

Other concrete conditions for the production can follow those set by the usual method. For instance, the methods described in e.g. Serurosu no Jiten, pp. 131-164 (Asakura Publishing Co., Ltd., 2000) can be referred to.

### 3. Resin Composition Including Cellulose Derivative, and Molded Matter

The present cellulose resin composition includes the present cellulose derivative, and can further include additives on an as needed basis.

Ingredients included in the cellulose resin composition are not particularly restricted as to their contents. The cellulose derivative content of the cellulose resin composition is preferably 75 mass % or above, far preferably 80 mass % or above, further preferably from 80 mass % to 100 mass %.

The cellulose resin composition relating to the invention preferably includes an inorganic salt containing an alkali metal or an alkaline earth metal. It is known that cellulose is generally apt to cause a reduction in molecular weight at the time of fusion by heating. Such a reduction is thought to be caused by the effect of a minute amount of carboxylic acid ions remaining in cellulose molecules. In view of this phenomenon, mixing of an inorganic salt containing an alkali metal or an alkaline earth metal allows prevention of molecular weight reduction at the time of molding and provision of a cellulose resin composition having ever-higher resistance to heat. In the case where an inorganic salt containing an alkali metal or an alkaline earth metal is incorporated in the cellulose resin composition, enhancement of heat resistance by prevention of molecular weight reduction can be made more noticeable by choosing the carbon numbers of aliphatic acyl groups in the cellulose derivative from the range of 7 to 11 in particular.

The content of an inorganic salt containing an alkali metal or an alkaline earth metal is preferably from 0.1 mass % to 50 mass %, far preferably from 1 mass % to 30 mass %, further preferably from 1 mass % to 20 mass %, with respect to the mass of the overall resin composition.

Examples of an inorganic salt containing an alkali metal or an alkaline earth metal include halides, hydroxides, oxides, acetates, sulfates, nitrates, carbonates and silicates of lithium, sodium, potassium, magnesium and calcium. The inorganic salts containing alkali metals or alkaline earth metals are preferably inorganic salts in which calcium and magnesium are contained, far preferably calcium carbonate, magnesium silicate and magnesium hydroxide.

Additionally, as inorganic salts for use in the invention, natural substances containing alkali metals or alkaline earth metals (e.g. talc (Mg₃Si₄O₁₀(OH)₂)) and natural substance-like synthesized compounds (e.g. synthetic hydrotalcites such as Mg₆Al₁₂(OH)₁₆CO₃·4H₂O, Mg_{4.5}Al₁₂(OH)₁₃CO₃·mH₂O (m=3 to 3.5) and Mg_{0.7}Al₀,₃O_{1.15}, and synthetic magnesium silicate such as Kyoword 600 (2MgO·6SiO₂·xH₂O), Kyowa Chemical Industry Co., Ltd.) are suitable too.

In addition to those ingredients, the cellulose resin composition relating to the invention can include various additives on an as needed basis. Examples of such additives include a filler (a reinforcing agent), a flame retardant, polymers other than cellulose ether ester, a plasticizer, an ultraviolet absorbent, an antioxidant, a mold release agent, an antistatic agent, a flame-retarding assistant, a working assistant, a drip inhibitor, an antimicrobial agent, a fungicide and a coloring agent.

The present resin composition can include a filler (a reinforcing agent). By including a filler, the resin composition can make molded matter having enhanced mechanical properties.

The filler used in the composition may be a filler in common use. The shape of the filler may be any of fibrous, tabular, granular and powdery. In addition, the filler may be either an inorganic substance or an organic substance.

Examples of an inorganic filler include fibrous inorganic fillers, such as glass fibers, carbon fibers, graphite fibers, metal fibers, aluminum borate whiskers, Wollastonite, silica fibers, silica-alumina fibers, zirconia fibers, boron nitrite fibers, silicon nitrite fibers and boron fibers; and tabular or granular inorganic fillers, such as glass flakes, carbon black, graphite, metal leaves, ceramic beads, kaolin, micronized silica, SHIRASU balloons, barium sulfate, aluminum oxide, titanium oxide, aluminum silicate, silicon oxide, aluminum hydroxide and white clay.

Examples of an organic filler include synthetic fibers, such as polyester fibers, nylon fibers, acrylic fibers, regenerated cellulose fibers and acetate fibers; natural fibers, such as Kenaf, Ramie, cotton, Jute, Hemp, Sisal, Abaca, Flax, linen, silk and wool; fibrous organic fillers derived from microcrystalline cellulose, sugarcane, wood pulp, scraps of paper, wastepaper or so on; and granular organic fillers such as organic pigments.

When the present resin composition includes a filler, the filler content, though not particularly limited, is preferably 30 parts by mass or below, far preferably from 5 parts by mass to 10 parts by mass, per 100 parts by mass of cellulose.

The present resin composition may include a flame retardant. By including the flame retardant, the composition can have an improved flame-retarding effect such as reduction or control of burning speed.

The flame retardant used therein, though not particularly restricted, may be a flame retardant in common use. Examples of such a flame retardant include bromine-based flame retardants, chlorine-based flame retardants, phosphorus-containing flame retardants, silicon-containing flame retardants, nitrogen compound-based flame retardants and inorganic flame retardants. Of these retardants, phosphorus-containing flame retardants and silicon-containing flame retardants are preferred over others because they cause no evolution of hydrogen halide through thermal decomposition at the time of mixing with resins and mold working, and therefore they rot neither working machines nor molds and cause no deterioration in a working environment, and besides, they have a low possibility of having detrimental effects on environments through dissipation of halogen into the air and production of deleterious substances like dioxins at the time of waste disposal by incineration.

Phosphorus-containing flame retardants usable herein have no particular restrictions and may be any of those in common use. Examples of such a flame retardant include organic phosphorus compounds such as phosphoric esters, fused phosphates and polyphosphoric acid salts.

Examples of phosphoric esters include trimethyl phosphate, triethyl phosphate, tributyl phosphate, tri(2-ethylhexayl) phosphate, tributoxyethyl phosphate, triphenyl phosphate, tricresyl phosphate, trixylenyl phosphate, tris(isopropylphenyl) phosphate, tris(phenylphenyl) phosphate, trinaphthyl phosphate, cresyldiphenyl phosphate, xylenyldiphenyl phosphate, diphenyl(2-ethylhexyl) phosphate, di(isopropylphenyl)phenyl phosphate, monoisodecyl phosphate, 2-acryloyloxyethylacid phosphate, 2-methacryloyloxyethylacid phosphate, diphenyl-2-acryloyloxyethyl phosphate, diphenyl-2-methacryloyloxyethyl phosphate, melamine phosphate, dimelamine phosphate, melamine pyrophosphate, triphenylphosphine oxide, tricresylphosphine oxide, diphenyl methanephosphonate and diethyl phenylphosphonate.

Examples of fused phosphates include fused aromatic phosphates such as resorcinol polyphenylphosphate, resorcinol poly(di-2,6-xylyl)phosphate, bisphenol A polycresylphosphate, hydroquinone poly(2,6-xylyl)phosphate and condensates of these phosphates.

In addition, polyphosphoric acid salts including the salts prepared from phosphoric acid or polyphosphoric acids and metals belonging to the group 1 to the group 14 in the periodic table, ammonia, aliphatic amines or aromatic amines can be cited as other examples. Examples of typical salts of polyphosphoric acids include metal salts, such as lithium salts, sodium salts, calcium salts, barium salts, iron(II) salts, iron(III) salts and aluminum salts; aliphatic amine salts such as methylamine salts, ethylamine salts, diethylamine salts, triethylamine salts, ethylenediamine salts and piperazine salts; and aromatic amine salts such as pyridine salts and triazine salts.

Examples of phosphorus-containing flame retardants other than those recited above include halogen-containing phosphoric esters, such as trischloroethyl phosphate, trisdichloropropyl phosphate and tris(β-chloropropyl) phosphate; phosphazene compounds having a structure that a double bond is formed between phosphorus and nitrogen atoms; and phosphoric ester amides.

These phosphorus-containing flame retardants may be used alone or as combinations of two or more thereof.

Examples of a silicon-containing flame retardant include organosilicon compounds of two-dimensional or three-dimensional structure, and polydimethylsiloxane or polydimethylsiloxanes whose side-chain or terminal methyl groups are substituted or modified with hydrogen atoms or substituted or unsubstituted aliphatic hydrocarbyl groups or aromatic hydrocarbyl groups, namely the so-called silicone oil or modified silicone oils.

Examples of a substituted or unsubstituted aliphatic or aromatic hydrocarbyl group include an alkyl group, a cycloalkyl group, a phenyl group, a benzyl group, an amino group, an epoxy group, a polyether group, a carboxyl group, a mercapto group, a chloroalkyl group, an alkyl higher-alcohol ester, an alcohol group, an aralkyl group, a vinyl group and a trifluoromethyl group.

These silicon-containing flame retardants may be used alone or as combinations of two or more thereof.

And examples of usable flame retardants other than the phosphorus-containing flame retardants and silicon-containing flame retardants include inorganic flame retardants such as magnesium hydroxide, aluminum hydroxide, antimony trioxide, antimony pentaoxide, sodium antimonite, zinc hydroxystannate, zinc stannate, metastannic acid, tin oxide, tin oxide salts, zinc sulfate, zinc oxide, ferrous oxide, ferric oxide, stannous oxide, stannic oxide, zinc borate, ammonium borate, ammonium octamolybdate, metal salts of tungstic acid, compound oxide of tungsten and metalloid, ammonium sulfamate, ammonium bromide, zirconium compounds, guanidine compounds, fluorine-containing compounds, graphite and swelling graphite. These flame retardants may be used alone or as combinations of two or more thereof.

When the present resin composition includes a flame retardant, the flame retardant content, though not particularly limited, is preferably 30 parts by mass or below, far preferably from 2 to 10 parts by mass, with respect to 100 parts by mass of cellulose derivative. By adjusting the flame retardant content to such a range, impact resistance, and brittleness can be improved and occurrence of pellet blocking can be inhibited.

In addition to the cellulose derivative, fillers and flame retardants, other ingredients may also be incorporated in the present resin composition for the purpose of ever-more improving various properties so long as they don't defeat the object of the invention.

Examples of the other ingredients include polymers other than the cellulose derivative, a plasticizer, a stabilizer (e.g. an antioxidant, a ultraviolet absorbent), a mold release agent (e.g. a fatty acid, a metal salt of fatty acid, a fatty oxyacid, a fatty acid ester, an aliphatic partially-saponified ester, paraffin, a low-molecular polyolefin, a fatty acid amide, an alkylenebisfatty acid amide, an aliphatic ketone, a fatty acid lower alcohol ester, a fatty acid polyhydric alcohol ester, a fatty acid polyglycol ester, modified silicone), an antistatic agent, a flame-retarding assistant, a working assistant, a drip inhibitor, an antimicrobial agent and a fungicide. Further, coloring materials including dyes and pigments can be added too.

As the polymers other than the cellulose derivative, both thermoplastic polymers and thermosetting polymers can be used, but thermoplastic polymers are preferred in point of moldability. Examples of the polymers other than the cellulose derivative include low-density polyethylene, straight-chain low-density polyethylene, high-density polyethylene, polypropylene, ethylene-propylene copolymer, ethylene-propylene-nonconjugate diene copolymer, ethylene-butene-1 copolymer, polypropylene homopolymer, polypropylene copolymers (e.g. ethylene-propylene block copolymer), polyolefins such as polybutene-1 and poly-4-methylpentene-1, polyesters such as polybutylene terephthalate, polyethylene terephthalate and other aromatic polyesters, polyamides such as nylon 6, nylon 46, nylon 66, nylon 610, nylon 612, nylon 6T and nylon 12, polystyrene, high-impact polystyrene, polyacetals (including homopolymers and copolymers), polyurethane, aromatic and aliphatic polyketones, polyphenylene sulfide, polyether ether ketone, thermoplastic starch resin, acrylic resins such as polymethyl methacrylate and methacrylate-acrylate copolymer, AS resin (acrylonitrile-styrene copolymer), ABS resin, AES resin (ethylenic rubber-reinforced AS resin), ACS resin (chlorinated polyethylene-reinforced AS resin), ASA resin (acrylic rubber-reinforced AS resin), polyvinyl chloride, polyvinylidene chloride, vinyl ester resins, maleic anhydride-styrene copolymer, MS resin (methyl methacrylate-styrene copolymer), polycarbonate, polyallylate, polysulfone, polyether sulfone, phenoxy resin, polyphenylene ether, modified polyphenylene ether, thermoplastic polyimide such as polyetherimide, fluoropolymers such as polytetrafluoroethylene, tetrafluoroethylene-hexafluoropropylene copolymer, tetrafluoroethylene-ethylene copolymer, tetrafluoroethylene-perfluoroalkyl vinyl ether copolymer, polychlorotrifluoroethylene, polyvinylidene fluoride and tetrafluoroethylene-hexafluoropropylene-perfluoroalkyl vinyl ether copolymer, cellulose acetate, polyvinyl alcohol, unsaturated polyester, melamine resin, phenol resin, urea resin and polyimide.

Further, thermoplastic elastomers are usable as other polymers, with examples including various types of acrylic rubber, ethylene-vinyl acetate copolymer, ethylene-acrylic acid copolymer and alkali metal salts thereof (the so-called ionomers), ethylene-alkyl ester acrylate copolymers (e.g. ethylene-ethyl acrylate copolymer, ethylene-butyl acrylate copolymer), diene series of rubber (e.g. 1,4-polybutadiene, 1,2-polybutadiene, polyisoprene, polychloroprene), copolymers of diene and vinyl monomers (e.g. styrene-butadiene random copolymer, styrene-butadiene block copolymer, styrene-butadiene-styrene block copolymer, styrene-isoprene random copolymer, styrene-isoprene block copolymer, styrene-isoprene-styrene block copolymer, styrene-grafted polybutadiene, butadiene-acrylonitrile copolymer), polyisobutylene, isobutylene-butadiene or isobutylene-isoprene copolymer, butyl rubber, natural rubber, thiol rubber, polysulfide rubber, acrylic rubber, nitrile rubber, polyether rubber, epichlorohydrin rubber, fluororubber, silicone rubber, and thermoplastic elastomers of polyurethane type, polyester type and polyamide type.

Further, polymers having various degrees of cross-linking, polymers of microstructure such as a cis-structure, a trans-structure, polymers having vinyl groups, polymers having various average particle sizes (in resin compositions) and polymers of multilayer structure which are known as core-shell rubber, wherein a core layer and at least one shell layer covering the core layer are included and layers adjacent to each other are formed from different types of polymers, can also be used, and furthermore core-shell rubber containing a silicone compound can be used as well.

These polymers may be used alone or as combinations of two or more thereof.

When polymers other than the cellulose derivative are incorporated in the present resin composition, their content is preferably from 30 parts by mass or below, far preferably from 2 to 10 parts by mass, per 100 parts by mass of the cellulose derivative.

The present resin composition may include a plasticizer. By doing so, the composition can have ever-more enhanced flame retardancy and moldability. As the plasticizer, those for common use in the molding of polymers can be used. Examples of such a plasticizer include a polyester-type plasticizer, a glycerin-type plasticizer, a polycarboxylic ester-type plasticizer, a polyalkylene glycol-type plasticizer and an epoxy-type plasticizer.

Examples of a polyester-type plasticizer include a polyester produced from an acid ingredient, such as adipic acid, sebacic acid, terephthalic acid, isophthalic acid, naphthalenedicarboxylic acid, diphenyldicarboxylic acid or rosin, and a diol ingredient, such as propylene glycol, 1,3-butanediol, 1,4-butanediol, 1,6-hexanediol, ethylene glycol or diethylene glycol, and a polyester derived from a hydroxycarboxylic acid such as polycaprolactone. The molecular ends of these polyesters may be blocked up with monofunctional carboxylic acids or monofunctional alcohols, or they may be end-blocked with epoxy compounds.

Examples of a glycerin-type plasticizer include glycerin monoacetomonolaurate, glycerin diacetomonolaurate, glycerin monoacetomonostearate, glycerin diacetomonooleate and glycerin monoacetomonomontanate.

Examples of a polycarboxylate-type plasticizer include phthalic esters such as dimethyl phthalate, diethyl phthalate, dibutyl phthalate, dioctyl phthalate, diheptyl phthalate, dibenzyl phthalate and butylbenzyl phthalate, trimellitic esters such as tributyl trimellitate, trioctyl trimellitate and trihexyl trimellitate, adipic esters such as diisodecyl adipate, n-octyl-n-decyl adipate, methyldiglycol butyldiglycol adipate, benzylmethyldiglycol adipate and benzylbutyldiglycol adipate, citric esters such as triethyl acetylcitrate and tributyl acetylcitrate, azelaic esters such as di-2-ethylhexyl azelate, and dibutyl sebacate and di-2-ethylhexyl sebacate.

Examples of a polyalkylene glycol-type plasticizer include polyalkylene glycols such as polyethylene glycol, polypropylene glycol, poly(ethylene oxide-propylene oxide) block and/or random copolymer, polytetramethylene glycol, ethylene-oxide addition polymers of bisphenols, propylene-oxide addition polymers of bisphenols and tetrahydrofuran addition polymers of bisphenols, and compounds obtained by modifying the molecular ends of those polyalkylene glycols with epoxy, ester or ether compounds.

The term epoxy-type plasticizers generally refers to the epoxytriglycerides prepared from alkyl epoxystearates and soybean oil. In addition to such epoxy compounds, the so-called epoxy resin, whose main raw materials are bisphenol A and epichlorohydrin, can also be used.

Examples of other plasticizers include benzoic acid esters of aliphatic polyols, such as neopentyl glycol dibenzoate, diethylene glycol dibenzoate and triethylene glycol di-2-ethylbutyrate, fatty acid amides such as stearic acid amide, aliphatic carboxylic acid esters such as butyl oleate, oxyacid esters such as methyl acetylricinoleate and butyl acetylricinoleate, pentaetythritol and various types of sorbitols.

When the plasticizer is incorporated in the present resin composition, its content is preferably 5 parts by mass or below, far preferably from 0.005 to 5 parts by mass, further preferably from 0.01 to 1 parts by mass, per 100 parts by mass of the cellulose derivative.

The present molded matter is obtained by molding a resin composition containing the present cellulose derivative or a combination of the present cellulose derivative and an additive (preferably a filler). More specifically, the molded matter is obtained by heating a resin composition containing the present cellulose derivative or a combination of the present cellulose derivative, a filler, and molding the resin composition in accordance with any of various molding methods.

Examples of a molding method usable therein include injection molding, extrusion molding and blow molding.

The heating temperature is preferably in a range of 160°C to 260°C, far preferably from 180°C to 240°C.

The present molded matter has no particular restrictions as to uses thereof, and their uses are e.g. as components making up automobiles, household electrical appliances or electrical and electronic equipment (such as OA- and media-related equipment, optical equipment or communications equipment), machine parts, and housing and building materials.

More specifically, examples of automotive components to which the present molded matter can be applied include interior components, such as a door trim, a pillar, an instrument panel, a console box, a locker panel, an arm rest, a door panel, a spare tire cover, a steering, a shift knob, a car navigation system, an air diffuser of air conditioner, a meter, various switches, a safety belt part, an air bag and a cover thereof, a torque control lever, a register blade, a washer lever, a window regulator handle and a knob thereof, a passing light lever, a sun visor, an overhead console, a back mirror, various motor housings and ETC;

exterior components, such as a bumper, a front spoiler, a front grille, a grille guard, a fender, a locker molding, a side step, a door mirror cover, a door mirror stay, a cowl louver, a wheel cap, a side protector, a side molding, a side lower skirt, a side step, a roof rail, a rear spoiler, a rear under spoiler, a garnish, a pillar, a wiper cover, a hard spare tire cover, a tailgate, a back door and a lamp bezel;

and engine peripheral components and mechanical parts, such as an air intake duct, an engine cover, an engine floor cover, a reserve tank, a radiator shroud, a fan, an air cleaner case, a timing belt cover, a cylinder head cover, an oil cap, an oil pan, an oil filter, a fuel cap, a fuel strainer, a vapor canister housing, an under deflector, an alternator terminal, an alternator connector, IC regulator, a potentiometer base, various valves including an exhaust-gas valve and so on, various pipes for use in fuel-related, emission and aspiration systems, an air intake nozzle snorkel, an intake manifold, a fuel pump, an engine coolant joint, a carburetor main body, a carburetor spacer, an exhaust-gas sensor, a coolant sensor, an oil-temperature sensor, a throttle position sensor, an air-flow meter, a thermostat base for air conditioner use, a heating warm-air flow control valve, a brush holder for radiator motor use, a water pump impeller, a wiper motor, a distributer, a starter switch, a starter relay, a wire harness for transmission use, a window washer nozzle, an air conditioner panel switch board, a coil for fuel-related electromagnetic valve use, a connector for fuse use, a horn, a horn terminal, a lamp socket, a lamp reflector and a lamp housing.

Examples of household electrical appliances to which the present molded matter can be applied as their interior or exterior components include a television set (with CRT, liquid crystal, plasma or organic EL display), a VTR, an iron, a hair dryer, a rice cooker, a microwave oven, an audiovisual system (such as a microphone, a speaker, an amplifier, a tuner or a radio-cassette player), various types of AV disc players, a hard disc recorder, a DVD recorder, an MD player, a memory player, a voice recorder, headphones, earphones, a washing machine, a washer-dryer, a vacuum cleaner, a rice cooker, a refrigerator, a freezer, a pot, a warmer, an air conditioner, a dishwasher, an air cleaner, a lighting fixture, an electric tool, a clock, a wristwatch, a thermometer, a massage machine, various health appliances, game machines (including a console game machine, an arcade game machine, a pinball machine and a slot machine) and a domestic robot.

Examples of OA- and media-related equipment to which the present molded matter can be applied as its interior or exterior component include a desktop personal computer, a notebook personal computer, a CRT display, a liquid crystal display, an organic EL display, a printer, a copier, a facsimile, a scanner, a typewriter, a word processor, an electronic dictionary, an ink cartridge, a toner cartridge, recording-medium drives (including HDD, CD, DVD, Blu-ray disc and FDD drives), a flash memory package, a tape drive package, optical recording media and their cases, a mouse and a key board, a digitizer, a liquid crystal projector, a screen for projector use, a laser pointer, an electronic whiteboard, a hub and wireless LAN.

Examples of optical equipment to which the present molded matter can be applied as its interior or exterior component include a camera, a digital camera, a video camera, a telescope, binoculars, a microscope, an electron microscope and an endoscope.

Examples of communications equipment to which the present molded matter can be applied as its interior and exterior components include a fixed-line phone, a mobile phone, a personal digital assistance, housings of various communications terminals, a wireless antenna, a TV antenna, a parabolic antenna and a GPS navigation system.

Examples of other electrical and electronics instruments to which the present molded matter can be applied include various gears, various cases, batteries (including a manganese battery, a nickel hydride battery and a lithium ion battery) and chargers thereof, adaptors (including an AC/DC voltage converter), a sensor, LED, a connector, a socket, a resistor, a relay case, a switch, a coil bobbin, a capacitor, a variable capacitor case, a light pickup, a radiator, various terminal strips, a transformer, a plug, a printed wiring board, a miniature motor, a magnetic head base, a power module, a semiconductor device, a liquid crystal device, an electric power plant, a circuit board, an integrated circuit mold, an optical disc substrate, a disc cartridge, an optical card, an IC memory card, a connector, a cable coupler, electronic component transfer containers (including an IC tray, an IC magazine case, a silicon wafer container, a glass substrate storage cabinet, a carrier tape and so on), a hot melt binder, a binder for electrode material use, an optical element, and a conductive embossed tape.

Examples of mechanical parts to which the present molded matter can be applied include a gear, a turn table, a rotor, a screw, a spring, bearings, a lever, a key-stem, a cam, a ratchet, a roller, a pump casing, a tank, a pipe and a building form.

Examples of housing and building materials to which the present molded matter can be applied include parts of e.g. wall paper, a pillar, a curtain, a chair re-covering cloth, a carpet, a table cloth, a futon cloth, a wash stand, a makeup stand, a storage rack, a toilet seat, a toilet lid, a paper holder, a sash roller, blind curtain parts, a plumbing joint, a curtain liner, a blind, a gas meter, a water meter, a water heater, water-supply parts, a roof panel, an exterior wall, an adjuster, a plastic foundation post, a tool for suspension from a ceiling, a staircase, a door, a floor, a handrail, a vegetation net, a vegetation mat, an anti-grass bag, an anti-grass net, a curing sheet, an artificial slope protective sheet, a flying ash holding sheet, a drain sheet, a water-retaining sheet, a sludge dewatering bag and a concrete form.

Examples of applications other than the above include interior or exterior parts of film products such as print lamination film, heat-sensitive mimeographic printing film, release film and porous film, a sheet material such as a container bag, various cards such as a credit card, a cash card, an ID card and an IC card, fisheries-related members such as a fishing line, a fishing net, a seaweed cultivation net and a bait bag, toy parts, a fan, a silken gut, a pipe, a wash jig, multiple film, film for tunnel use, agricultural members such as a sheet for protection against birds, vegetation protective nonwoven cloth, a pot for raising a sapling, a vegetation pile, a seed cord in tape form, a germination sheet, a house lining sheet, a shoe for agricultural vinyl film, a slow-acting fertilizer, a root protection film, a gardening net, a net for protection against insects, a net for trees of tender age, laminated prints, a fertilizer bag, a sample bag, a sandbag, a net for protection against harmful animals, an inducement cord and a windbreak net, sanitary articles such as a disposable diaper, a wrapping of sanitary items, a cotton swab, a moist hand towel and a toilet seat wiper, medical supplies such as medical nonwoven cloths (including a stitched-area reinforcing material, an adhesion preventive film and a prosthesis remedying material), a wound covering material, a wound tape bandage, a base cloth of plaster material, a suture for use in operation, a broken bone reinforcing material and medical film, a calendar, stationery, clothing, wrapping film for food, receptacles and eating utensils such as a tray, a blister pack, a knife, a fork, a spoon, a tube, a plastic can, a pouch, a container, a tank and a basket, hot-fill containers, vessels for microwave cooking, bottles for cosmetics, a wrap, a foaming buffer, laminated paper products, a shampoo bottle, a beverage bottle, a cap, a candy wrapping, a shrink label, a lid material, a window envelope, a fruit basket, a tape capable of cutting with hand, a easy peel wrapping, an egg package, an HDD casing, a compost bag, a recording media package, a shopping bag, containers and packages for electrical and electronics components and the like, including a wrapping film, a natural fiber composite, a golf tee, a garbage bag, a bag for checked-out purchases, various types of nets, a toothbrush, writing materials, a draining net, a body towel, a hand towel, a tea pack, a drainage filter, a clear file, a briefcase, a cooler box, a rake, a hose reel, a planter, a hose nozzle, a pen cap and a gas lighter.

Of the uses recited above, uses as components making up electrical and electronic equipment (notably the use as a housing) are preferred over the others because the present molded matter has high heat resistance, high impact resistance and low environmental load.

### Examples

The invention is illustrated below in the concrete by reference to the following examples and comparative examples, but the examples shown below should not be construed as limiting the scope of the invention.

### <Synthesis Example 1: Synthesis of Methyl Cellulose Butanoate (P-1) > (Reference example)

80g of methyl cellulose (produced by Wako Pure Chemical Industries, Ltd., degree of methyl substitution: 1.8), 1,000 mL of methylene chloride and 1,000 mL of pyridine were weighed out, placed in a 5L three necked flask equipped with a mechanical stirrer, a thermometer, a condenser and a dropping funnel, and stirred at room temperature. Thereto 1,000 mL of butyric anhydride was slowly added dropwise, and further thereto about 0.2 g of dimethylaminopyridine (DMAP) was added. And the resulting mixture was refluxed for 3 hours. After having undergone reaction, the mixture was cooled to room temperature, and then quenched by addition of 200 mL of methanol under ice-water cooling. The thus obtained reaction solution was charged into a water-methanol (10L/10L) mixture with vigorous stirring, and thereby a white solid separated out. The white solid was filtered off with suction, and washed with a large volume of water for three times. The white solid obtained was subjected to 6-hour vacuum drying at 100°C, thereby giving the intended cellulose derivative (P-1) (methylcellulose butanoate with the degree of substitution shown in Table 1) in a white powder form (85.0 g).

### <Synthesis Example 2: Synthesis of Methyl Cellulose Octanoate (P-2)> (Reference example)

80g of methyl cellulose (produced by Wako Pure Chemical Industries, Ltd., degree of methyl substitution: 1.8) and 1,500 mL of pyridine were weighed out, placed in a 3L three necked flask equipped with a mechanical stirrer, a thermometer, a condenser and a dropping funnel, and stirred at room temperature. Thereto, 160 mL of n-octanoyl chloride was slowly added dropwise under water cooling, and further stirred for 6 hours at 60°C. After having undergone reaction, the resulting mixture was cooled to room temperature, and then quenched by addition of 200 mL of methanol under ice-water cooling. The thus obtained reaction solution was charged into 12L of water with vigorous stirring, and thereby a white solid separated out. The white solid was filtered off with suction, and washed with a large volume of methanol solvent for three times. The white solid obtained was subjected to 6-hour vacuum drying at 100°C, thereby giving the intended cellulose derivative (P-2) (methylcellulose octanoate with the degree of substitution shown in Table 1) in a white powder form (93.3 g).

### <Synthesis Example 3: Synthesis of Methylcellulose-2-ethylhexanoate (P-3)>

The intended cellulose derivative (P-3) (methylcellulose-2-ethylhexanoate with the degree of substitution shown in Table 1) was obtained in a white powder form (91.4 g) in the same manner as in Synthesis Example 2, except that n-octanoyl chloride was changed to 2-ethylhexanoyl chloride.

### <Synthesis Example 4: Synthesis of Methylcellulose-2-ethylhexanoate (P-4)>

The intended cellulose derivative (P-4) (methylcellulose-2-ethylhexanoate with the degree of substitution shown in Table 1) was obtained in a white powder form (88.0 g) in the same manner as in Synthesis Example 3, except that the methyl cellulose (produced by Wako Pure Chemical Industries, Ltd., degree of methyl substitution: 1.8) was changed to another methyl cellulose (a synthetic product, degree of methyl substitution: 2.1).

### <Synthesis Example 5: Synthesis of Methylcellulose-2-methylheptanoate (P-5)>

The intended cellulose derivative (P-5) (methylcellulose-2-methylheptanoate with the degree of substitution shown in Table 1) was obtained in a white powder form (92.0 g) in the same manner as in Synthesis Example 3, except that 2-ethylhexanoyl chloride was changed to 2-methylheptanoyl chloride.

### <Synthesis Example 6: Synthesis of Methylcellulose-2-propylpentanoate (P-6)>

The intended cellulose derivative (P-6) (methylcellulose-2-propylpentanoate with the degree of substitution shown in Table 1) was obtained in a white powder form (89.6 g) in the same manner as in Synthesis Example 4, except that 2-ethylhexanoyl chloride was changed to 2-propylpentanoyl chloride.

### <Synthesis Example 7: Synthesis of Ethylcellulose-3-methylbutanoate (P-7)>

80g of ethyl cellulose (produced by Aldrich Co. , degree of ethoxy substitution: 2.4) and 1,500 mL of pyridine were weighed out, placed in a 3L three necked flask equipped with a mechanical stirrer, a thermometer, a condenser and a dropping funnel, and stirred at room temperature. Thereto, 40 mL of 3-methylbutanoyl chloride was slowly added dropwise under water cooling, and further stirred for 6 hours at 60°C. After having undergone reaction, the resulting mixture was cooled to room temperature, and then quenched by addition of 200 mL of methanol under ice-water cooling. The thus obtained reaction solution was charged into 12L of water with vigorous stirring, and thereby a white solid separated out. The white solid was filtered off with suction, and washed with a large volume of methanol-water (1/1 (v/v)) solvent mixture for three times. The white solid obtained was subjected to 6-hour vacuum drying at 100°C, thereby giving the intended cellulose derivative (P-7) (ethylcellulose-3-methylbutanoate with the degree of substitution shown in Table 1) in a white powder form (79.6 g).

### <Synthesis Example 8: Synthesis of Ethylcellulose-2-ethylhexanoate (P-8)>

The intended cellulose derivative (P-8) (ethylcellulose-2-ethylhexanoate with the degree of substitution shown in Table 1) was obtained in a white powder form (88.5 g) in the same manner as in Synthesis Example 7, except that 3-methylbutanoyl chloride was changed to 2-ethylhexanoyl chloride.

### <Synthesis Example 9: Synthesis of Methylcellulose-2-ethylhexanoate (P-9)>

80g of methyl cellulose (produced by Wako Pure Chemical Industries, Ltd., degree of methyl substitution: 1.8) and 1,500 mL of pyridine were weighed out, placed in a 3L three necked flask equipped with a mechanical stirrer, a thermometer, a condenser and a dropping funnel, and stirred at room temperature. Thereto, 160 mL of 2-ethylhexanoyl chloride was slowly added dropwise under water cooling, and further stirred for 6 hours at 60°C. After having undergone reaction, the resulting mixture was cooled to room temperature, and then quenched by addition of 200 mL of methanol under ice-water cooling. The thus obtained reaction solution was charged into 12L of water with vigorous stirring, and thereby a white solid separated out. The white solid was filtered off with suction, and washed with a large volume of methanol solvent for three times. The white solid obtained was subjected to 6-hour vacuum drying at 100°C, thereby giving the intended cellulose ether ester (P-9) in a white powder form (93.3 g).

### <Synthesis Example 10: Synthesis of Methylcellulose-2-ethylhexanoate (P-10)>

Cellulose ether ester (P-10) was obtained in the same manner as in Synthesis Example 9, except that the amount of 2-ethylhexanoyl chloride used was changed to 72 mL.

### <Synthesis Example 11: Synthesis of Methyl Cellulose Butanoate (P-11) > (Reference example)

80g of methyl cellulose (produced by Wako Pure Chemical Industries, Ltd., degree of methyl substitution: 1.8), 1,000 mL of methylene chloride and 1,000 mL of pyridine were weighed out, placed in a 5L three necked flask equipped with a mechanical stirrer, a thermometer, a condenser and a dropping funnel, and stirred at room temperature. Thereto 60 mL of butanoyl chloride was slowly added dropwise, and the resulting mixture was further stirred for 6-hours at 60°C. After having undergone reaction, the mixture was cooled to room temperature, and then quenched by addition of 200 mL of methanol under cooling in an ice bath. The thus obtained reaction solution was charged into a water-methanol (10L/10L) mixture with vigorous stirring, and thereby a white solid separated out. The white solid was filtered off with suction, and washed with a large volume of water for three times. The white solid obtained was subjected to 6-hour vacuum drying at 100°C, thereby giving cellulose ether ester (P-11) in a white powder form (85.0 g).

### <Synthesis of Comparative Compound 1: Synthesis of 2-Ethylhexanoyl Cellulose (H-1)>

50g of cellulose (KCflock W100, produced by Nippon Paper Group, Inc.) and 1,800 mL of dimethylacetamide were weighed out, placed in a 3L three necked flask equipped with a mechanical stirrer, a thermometer, a condenser and a dropping funnel, and stirred for 2 hours at 120°C. Thereto 150 g of lithium chloride was added, and further stirred for 1 hour. Then, the reaction solution was cooled to room temperature. Thereto, 150 g of 2-ethylhexanoyl chloride was added dropwise under room temperature, and further stirred for 2 hours at 90°C. The thus obtained reaction solution was charged into 10L of methanol with vigorous stirring, and thereby a white solid separated out. The white solid was filtered off with suction, and washed with a large volume of methanol for three times. The white solid obtained was subjected to 6-hour vacuum drying at 100°C, thereby giving the intended cellulose derivative (H-1) (2-ethylhexanoyl cellulose with a 2-ethylhexanoyl substitution degree of 2.1) in a white powder form (92.1 g).

### <Synthesis of Comparative Compound 2: Synthesis of Methyl Cellulose (H-2)>

100g of methyl cellulose (produced by Wako Pure Chemical Industries, Ltd., degree of methyl substitution: 1.8) and 2,000 mL of dimethylacetamide were weighed out, placed in a 3L three necked flask equipped with a mechanical stirrer, a thermometer, a condenser and a dropping funnel, and stirred at room temperature. Thereto 100 g of powdery sodium hydroxide was added, and further stirred for 1 hour at 60°C. Then the thus obtained reaction solution was cooled, thereto 80 mL of methyl iodide was added dropwise under water cooling, and further stirred for 3 hours at 50°C. The reaction solution was charged into 12L of methanol with vigorous stirring, and thereby a white solid separated out. The white solid was filtered off with suction, and washed with a large volume of isopropanol for three times. The white solid obtained was subjected to 6-hour vacuum drying at 100°C, thereby giving the intended cellulose derivative (H-2) (methyl cellulose with a methyl substitution degree of 2.1) in a white powder form (85.3 g).

Additionally, as to each of the compounds mentioned above, the kinds of functional groups substituted for hydroxyl groups in cellulose (R², R³ and R⁶), DS_{A}, DS_{B} and DS_{C} were determined by utilizing the methods described in Cellulose Communication, 6, 73-79 (1999) and Chirality, 12 (9), 670-674 and observing the ¹H-NMR or ¹³C-NMR spectrum of each compound.

### <Physical Property Measurements on Cellulose Derivative>

As to each of the cellulose derivatives obtained, its number-average molecular weight (Mn), weight-average molecular weight (Mw), molecular weight distribution (MWD), glass transition temperature (Tg) and melt flow rate (MFR) at 200°C are shown in Table 1. Methods for measuring these physical properties are as follows.

### [Molecular Weight and Molecular Weight Distribution]

Number-average molecular weight (Mn), weight-average molecular weight (Mw) and molecular weight distribution (MWD) measurements were made using gel permeation chromatography (GPC). To be more specific, these values were determined by using tetrahydrofuran as a solvent, polystyrene gel and a reduced molecular weight calibration curve plotted in advance from a composition curve of standard monodisperse polystyrene samples. The GPC apparatus used was HLC-8220GPC (made by TOSOH CORPORATION).

### [Glass Transition Temperature (Tg)]

A glass transition temperature was measured using a differential scanning calorimeter (product number: DSC6200, made by Seiko Instruments Inc.) under a temperature rise condition of 10°C/minute. Additionally, the mark "-" in the table means that the compound concerned showed no thermal plasticity.

### [Melt Flow Rate (MFR)]

The melt flow rate of each compound was measured by using MELTINDEXER (made by TOYO SEIKI SEISAKU-SHO, LTD.) under a load of 2 kg in conformity with ISO 1133.

**Table 1**

| Cellulose Derivative | Degree of Hydroxyl Group Substitution DS_{A} | Hydrocarbyl Group | | | Aliphatic Acyl Group | | | Mn × 10³ | Mw×10³ | MWD | Tg | MFR (g/10 min: 200°C |
|---|---|---|---|---|---|---|---|---|---|---|---|---|
| | | Kind | Carbon Number | Degree of Substitution DS_{B} | kind | Carbon Number | Degree of Substitution DS_{C} | | | | | |
| P-1 ** | 0.3 | Methyl | 1 | 1.8 | Butanoyl | 4 | 0.9 | 171 | 581.4 | 3.4 | 97 | 18.6 |
| P-2 ** | 0.4 | Methyl | 1 | 1.8 | Octanoyl | 8 | 0.8 | 192 | 633.6 | 3.3 | 84 | 23.5 |
| P-3 | 0.4 | Methyl | 1 | 1.8 | 2-Ethylhexanoyl | 8* | 0.8 | 197 | 673 | 3.4 | 99 | 5.3 |
| P-4 | 0.2 | Methyl | 1 | 2.1 | 2-Ethylhexanoyl | 8* | 0.7 | 185 | 592 | 3.2 | 110 | 3.7 |
| P-5 | 0.5 | Methyl | 1 | 1.8 | 2-Methylheptanoyl | 8* | 0.7 | 179 | 572.8 | 3.2 | 95 | 12.8 |
| P-6 | 0.2 | Methyl | 1 | 2.1 | 2-Propylpentanoyl | 8* | 0.7 | 182 | 618.8 | 3.4 | 104 | 10.4 |
| P-7 | 0.1 | Ethyl | 2 | 2.4 | 3-Methylbutanoyl | 5* | 0.5 | 188 | 582.8 | 3.1 | 103 | 7.7 |
| P-8 | 0.4 | Ethyl | 2 | 2.4 | 2-Ethylhexanoyl | 8* | 0.2 | 133 | 478.8 | 3.6 | 102 | 5.3 |
| P-9 | 0.3 | Methyl | 1 | 1.8 | 2-Ethylhexanoyl | 8* | 0.9 | 135 | 472.5 | 3.5 | 9.4 | 6.1 |
| P-10 | 0.7 | Methyl | 1 | 1.8 | 2-Ethylhexanoyl | 8* | 0.5 | 70 | 210 | 3.0 | 105 | 4.2 |
| P-11 ** | 0.3 | Methyl | 1 | 1.8 | Butanoyl | 4 | 0.9 | 66 | 264 | 4.0 | 92 | 21.6 |
| H-1 | 0.9 | - | - | - | 2-Ethylhexanol | 8* | 2.1 | 290 | 870 | 3.0 | 77 | 55.6 |
| H-2 | 0.9 | Methyl | 1 | 2.1 | - | - | - | 130 | 416 | 3.2 | - | No flow |
| H-3 | 1.2 | Methyl | 1 | 1.8 | - | - | - | 128 | 422.4 | 3.3 | - | No flow |
| H-4 | 0.6 | Ethyl | 2 | 2.4 | - | - | - | 102 | 316.2 | 3.1 | 110 | 4.6 |
| H-5 | 0.4 | - | - | - | Acetyl and propanoyl | 2 and 3 | Acetyl: 0.1 Propanoyl: 2.5 | 70 | 234 | 3.3 | 125 | 2.1 |
| H-6 | 0.5 | - | - | - | Acetyl | 2 | 2.5 | 72 | 19 | 2.7 | 140 | 0.6 |

| | | | | | | | | | | | | |
|---|---|---|---|---|---|---|---|---|---|---|---|---|
| Each asterisk (*) in the table denotes that the group concerned has a branched structure. (**) Reference example H-3: Cellulose ether (methyl cellulose, produced by Wako Pure Chemical Industries, Ltd.) H-4: Cellulose ether (ethyl cellulose, produced by Aldrich Co.) H-5: Cellulose ester (cellulose acetate propionate CAP482-20, produced by Eastman Chemical Company) H-6: Cellulose ester (cellulose acetate L-70, produced by DAICEL CHEMICAL INDUSTRIES, LTD.) | | | | | | | | | | | | |

### <Example 1: Making of Molded Matter Containing Cellulose Derivative>

### [Making of Test Specimen]

The cellulose derivative (P-1) was fed into an injection molding machine (a semiautomatic injection molding machine made by IMOTO MACHINERY CO. , LTD.) and molded into multipurpose test specimens with dimensions of 4x10x80 mm (specimens for impact test and heat deformation test) at a cylinder temperature of 190°C, a mold temperature of 30°C and an injection pressure of 1.5 kgf/cm².

The cylinder temperature under polymer molding was adjusted to a temperature at which the melt flow rate fell within the range of 6-9 g/10 min. And the mold temperature was set at 30°C.

### <Examples 2 to 8, Comparative Examples 1 to 4>

Test specimens were made using the present cellulose derivatives (P-2) to (P-8) and the comparative cellulose derivatives (H-1) to (H-4), respectively, in the same manner as in Example 1, except that the derivatives were molded under the conditions shown in Table 2.

### <Physical Property Measurements on Test Specimens>

On each of the test specimens obtained, Charpy impact strength and heat deformation temperature (HDT) measurements were made in accordance with the following methods. Results obtained are shown in Table 2.

### [Charpy Impact Strength]

In conformity with ISO 179, a notch with an incident angle of 45±0.5° and a tip of 0.25±0.05 mm was formed in each of the specimens molded by injection molding, and allowed to stand for at least 48 hours in the atmosphere conditioned to a temperature of 23°C±2°C and a humidity of 50%±5% RH. Impact strength of each of the resulting specimens was measured edgewise by means of a Charpy impact testing machine (made by TOYO SEIKI SEISAKU-SHO LTD.).

### [Heat Deformation Temperature (HDT)]

In conformity with ISO 75, a given bending load (1.8 MPa) was imposed (flatwise) on midpoint of each specimen. And a temperature at which an amount of distortion in the midpoint reached to 0.34 mm as the specimen's temperature was raised at a constant speed was determined.

**Table 2**

| | Cellulose Derivative | Cylinder Temperature (°C) | Mold Temperature (°C) | Charpy Impact Strength (kJ/m²) | HDT (°C) |
|---|---|---|---|---|---|
| Example 1 ** | P-1 | 190 | 30 | 8.1 | 65 |
| Examples 2 ** | P-2 | 180 | 30 | 12.3 | 55 |
| Example 3 | P-3 | 215 | 30 | 21.7 | 68 |
| Example 4 | P-4 | 225 | 30 | 17.6 | 77 |
| Example 5 | P-5 | 190 | 30 | 16.7 | 66 |
| Example 6 | P-6 | 210 | 30 | 15.5 | 74 |
| Example 7 | P-7 | 200 | 30 | 11.2 | 75 |
| Example 8 | P-8 | 215 | 30 | 13.5 | 73 |
| Comparative Example 1 | H-1 | 160 | 30 | 6.5 | 45 |
| Comparative Example 2 | H-2 | Not having thermal plasticity | | | |
| Comparative Example 3 | H-3 | Not having thermal plasticity | | | |
| Comparative Example 4 | H-4 | 220 | 30 | 0.8 | 80 |

| | | | | | |
|---|---|---|---|---|---|
| (**) Reference example | | | | | |

As can be clearly seen from the results shown in Table 2, methyl cellulose does not exhibit thermal plasticity, whereas the modification made thereto by use of aliphatic acyl groups allows impartment of thermal plasticity, and thereby the modified methyl cellulose becomes able to be molded, what's more it exhibits high impact resistance and heat resistance. In addition, it is shown that ethyl cellulose, though it has thermal plasticity, comes to have significant improvements, notably in impact resistance, through the modification made thereto by the use of aliphatic acyl groups. Further, as compared with the case of using 2-ethylhexanoyl cellulose (Comparative Example 1), the molded matter using any of the present cellulose derivatives is found to be superior in compatibility between high heat resistance and high impact resistance.

In other words, it is found that the present cellulose derivatives can produce unanticipated effects of exhibiting thermal plasticity and achieving compatibility between impact resistance and heat resistance.

### <Examples 9 to 21 and Comparative Examples 5 to 8>

### [Making of Molded Matter]

Cellulose resin composition was prepared by mixing a cellulose derivative, a filler and an antioxidant in the ratio as shown in Table 3. This resin composition was fed into a twin screw kneading extruder (Ultranano, made by TECHNOVEL CORPORATION) whose cylinder temperature was set at the kneading temperature as shown in Table 4, and formed into pellets.

The pellets obtained were fed into an injection molding machine (an automatic injection molding machine Roboshot S-2000i, made by FANUC CORPORATION), and molded into multipurpose test specimens with dimensions of 4x10x80 mm (specimens for impact test, heat deformation test and bending test) under conditions that the cylinder temperature (a molding temperature) and the mold temperature were set as shown in Table 4 and the injection pressure was set at 100 MPa.

The resin compositions prepared in Examples 9 to 21 showed good thermal plasticity, and the mold working thereof presented no problem. (Injection molding in these cases is denoted as good in Table 4.)

The resin compositions prepared in Comparative Examples 5 and 6, though able to be made into molded pieces, were high in viscosity and developed serious surface roughness (silver streaks). On the other hand, making of molded pieces free of such a defect requires raising the molding temperature, but it is difficult to raise the molding temperature because of approach to the thermal degradation temperatures of the specimens. (Injection molding in these cases is denoted as no-good in Table 4.)

The resin compositions prepared in Comparative Examples 7 and 8 were high in viscosity even under high temperatures because of their low plasticity, and injection molding thereof was unsuccessful.

In Table 3, the inorganic salts, the fillers and the antioxidant refer to the following ingredients.
(Inorganic Salts)
- Talc (Mg₃Si₄O₁₀(OH)₂): MICRO ACE series P-6, a product of NIPPON TALC Co., Ltd.
- Calcium carbonate: Vigot 10, a product of SHIRAISHI CALCIUM KAISHA
- Magnesium hydroxide: a product of Wako Pure Chemical Industries, Ltd.
- Sodium carbonate: a product of KANTO KAGAKU
- Kyoward 600 (2MgO·6SiO₂·xH₂O): a product of Kyowa Chemical Industry Co., Ltd.
(Antioxidant)
- Phenol-type antioxidant: Irganox 1010, a product of Ciba Specialty Chemicals Corporation

### [Evaluations]

The multipurpose test specimens obtained were rated in the following categories.

### (Elasticity Modulus in Bending)

In conformity with ISO 178, each of the test specimens molded by injection molding was allowed to stand for at least 48 hours in the atmosphere conditioned to a temperature of 23°C±2°C and a humidity of 50%±5% RH, and then measured for an elasticity modulus in bending by means of an Instron (Strograph V50, made by TOYO SEIKI SEISAKU-SHO, LTD.) under conditions that the distance between fulcrums was set at 64 mm and the testing speed was set at 2 mm/min.

### (Bending Strength)

In conformity with ISO 178, each of the test specimens molded by injection molding was allowed to stand for at least 48 hours in the atmosphere conditioned to a temperature of 23°C±2°C and a humidity of 50%±5% RH, and then subjected to a bend test using an Instron (Strograph V50, made by TOYO SEIKI SEISAKU-SHO, LTD.) under conditions that the distance between fulcrums was set at 64 mm and the testing speed was set at 2 mm/min. The maximum stress during the test was defined as the bending strength.

### (Heat Deformation Temperature (HDT) and Charpy Impact Strength)

These were measured in accordance with the same methods as mentioned above.

### (Molecular Weight Retention Rate with respect to Molecular Weight before Kneading)

Each molded matter was measured for its number-average molecular weight (Mn) by use of gel permeation chromatography (GPC). More specifically, the number-average molecular weight was determined by the use of tetrahydrofuran as a solvent, polystyrene gel and a reduced molecular weight calibration curve plotted in advance from a composition curve of standard monodisperse polystyrene samples. The GPC apparatus used was HLC-8220GPC (made by TOSOH CORPORATION). From the number-average molecular weight (Mn) thus obtained after molding and the number-average molecular weight (Mn) of ethyl cellulose before kneading, the molecular weight retention rate (%) was calculated in accordance with the expression: [number-average molecular weight (Mn) after molding/ number-average molecular weight (Mn) before kneading] × 100.

### (Moisture Content)

In conformity of JIS K 7209, each molded specimen was dried for 24 hours at 50°C, and then subjected to weight measurement and further to 24-hour immersion in a 23°C thermostatic water tank. Thereafter, water other than internal moisture was wiped off the specimen surface, and weight measurement was immediately made on the specimen. The moisture content (%) was determined by the expression: [(weight after immersion/weight before immersion - 1) × 100] . Additionally, the moisture content becomes one of indicators of moldability because a reduction in moldability is caused by an increase in moisture content.

### (Flow Property)

Fine particles or pellets were charged into a flow tester (CFT-100D, made by Shimadzu Corporation, wherein a die of L=10 mm and D=1.0 mm was used) at a temperature of their glass transition temperature or below, and thereon a temperature rise survey was made under conditions that the shear velocity was set at 100 s⁻¹ and the temperature rise speed was set at 2°C/min. And the flow property was rated by adopting as an indicator the temperature (°C) at which the apparent viscosity under this survey reached to a value of 100 Pa·S, which generally allows easy injection molding.

### (Temperature at which 2 wt% Reduction in Weight Occurs under the Atmosphere)

A temperature at which a 2 wt% reduction in weight occurred under the atmosphere was determined as an indicator of thermal decomposition temperature. Weight reduction measurements were made in a temperature range of 30°C to 500°C at a temperature rising speed of 10°C/min under the dry atmosphere by using a specimen in an amount of 5 mg and a simultaneous measuring instrument for thermogravimetry and differential thermal analysis, TG/DTA made by SII Nano Technology Inc. Thereby, the temperature at which a reduction in weight reached 2 wt% was determined.

Results thus obtained are shown in Table 4.

**Table 3**

| | Resin Composition | | | | | | | |
|---|---|---|---|---|---|---|---|---|
| | Resin | | Inorganic Salts | | | | | Anti-oxidant (mass%) |
| | Kind | Content (mass%) | Talc (mass%) | Calcium Carbonate (mass%) | Magnesium Hydroxide (mass%) | KyoWard 600 (mass%) | Sodium Carbonate (mass%) | |
| Example 9 | P-9 | 99.5 | - | - | - | - | - | 0.5 |
| Example 10 | P-9 | 80 | 20 | - | - | - | - | - |
| Example 11 | P-10 | 99 | - | - | - | - | - | 1 |
| Examples 12 | P-10 | 99 | 1 | - | - | - | - | - |
| Example 13 | P-10 | 80 | 20 | - | - | - | - | - |
| Example 14 | P-10 | 70 | 30 | - | - | - | - | - |
| Example 15 | P-10 | 99 | - | 1 | - | - | - | - |
| Example 16 | P-10 | 95 | - | 5 | - | - | - | - |
| Example 17 | P-10 | 80 | - | 20 | - | - | - | - |
| Example 18 | P-10 | 99 | - | - | 1 | - | - | - |
| Example 19 | P-10 | 99 | - | - | - | 1 | - | - |
| Example 20 | P-10 | 99 | - | - | - | - | 1 | - |
| Example 21 * | P-11 | 80 | 20 | - | - | - | - | - |
| Comparative Example 5 | H-5 | 69.5 | 30 | - | - | - | - | 0.5 |
| Comparative Example 6 | H-5 | 69.5 | - | 30 | - | - | - | 0.5 |
| Comparative Example 7 | H-6 | 69.5 | 30 | - | - | - | - | 0.5 |
| Comparative Example 8 | H-6 | 84.5 | 15 | - | - | - | - | 0.5 |

| | | | | | | | | |
|---|---|---|---|---|---|---|---|---|
| (*) Reference example | | | | | | | | |

**Table 4**

| | Kneading Temp. (°C) | Injection Molding | Molding Temp. (°C) | Mold Temp. (°C) | Mn after Kneading (×10⁴) | Elasticity modulus in Bending (GPa) | Bending strength (MPa) | HDT (°C) | Charpy Impact Strength (kJ/m²) | Molecular Weight Retention Rate (%) | Moisture Content (%) | Flow Property (°C) | 2 wt% Weight Reduction Temp. (°C) |
|---|---|---|---|---|---|---|---|---|---|---|---|---|---|
| Example 9 | 200 | good | 210 | 30 | 9.8 | 1.2 | 32 | 56 | 15 | 74 | 0.78 | 160 | 253 |
| Example 10 | 200 | good | 220 | 30 | 13.2 | 2.0 | 45 | 60 | 17 | 99 | 0.58 | 175 | 286 |
| Example 11 | 210 | good | 220 | 30 | 4.0 | 1.9 | 57 | 75 | 6.5 | 58 | 1.3 | 195 | 234 |
| Example 12 | 210 | good | 220 | 30 | 6.6 | 1.9 | 58 | 76 | 11 | 95 | 1.3 | 215 | 262 |
| Example 13 | 210 | good | 220 | 30 | 6.8 | 2.8 | 66 | 78 | 11 | 97 | 0.91 | 211 | 262 |
| Example 14 | 210 | good | 225 | 30 | 6.9 | 3.5 | 71 | 80 | 7.8 | 99 | 0.74 | 215 | 289 |
| Example 15 | 210 | good | 220 | 30 | 6.5 | 1.9 | 57 | 74 | 10 | 94 | 0.9 | 210 | 263 |
| Example 16 | 210 | good | 220 | 30 | 6.9 | 2.0 | 58 | 75 | 10 | 98 | 0.8 | 210 | 288 |
| Example 17 | 210 | good | 220 | 30 | 6.8 | 2.5 | 64 | 79 | 10 | 97 | 0.8 | 213 | 284 |
| Example 18 | 210 | good | 220 | 30 | 6.4 | 1.9 | 58 | 74 | 10 | 92 | 1 | 210 | 259 |
| Example 19 | 210 | good | 220 | 30 | 6.8 | 1.9 | 58 | 76 | 11 | 98 | 0.68 | 218 | 291 |
| Example 20 | 210 | good | 220 | 30 | 6.6 | 2.0 | 57 | 78 | 11 | 94 | 0.69 | 217 | 277 |
| Example 21 ** | 230 | no-good | 240 | 30 | 5.0 | 2.2 | 47 | 69 | 4 | 76 | 1.4 | 228 | 251 |
| Comparative Example 5 | 230 | no-good | 240 | 30 | 5.1 | 4.6 | 82 | 82 | 1.9 | 73 | 1.3 | 240 | 254 |
| Comparative Example 6 | 230 | no-good | 240 | 30 | 5.3 | 3.1 | 74 | 82 | 1.6 | 76 | 1.5 | 237 | 257 |
| Comparative Example 7 | unable to make evaluations of kneading and molding | | | | | | | | | | | | |
| Comparative Example 8 | unable to make evaluations of kneading and molding | | | | | | | | | | | | |

| | | | | | | | | | | | | | |
|---|---|---|---|---|---|---|---|---|---|---|---|---|---|
| *) Temperature at which the apparent viscosity reached to 1,000 Pa·s under the shear speed of 100 sec⁻¹. ** Reference example | | | | | | | | | | | | | |

The results shown above prove that the cellulose resin compositions prepared in Examples 9 to 21 are superior in mold working suitability, heat resistance and impact resistance to the cellulose resin compositions prepared in Comparative Examples 5 to 8, and besides, they have moderate elasticity. In addition, as can be seen from a comparison between Example 9 and Example 10 or a comparison between Example 11 and each of Examples 12 to 20, heat resistance in particular is further enhanced by addition of the inorganic salt containing an alkali metal or an alkaline earth metal to the cellulose resin composition.

The matter molded from the present cellulose derivative or cellulose resin composition has good impact resistance and heat resistance, and can be used suitably as components of automobiles, household electrical appliances, electrical and electronic equipment, machine parts, housing and building materials. Moreover, the present cellulose derivative is a resin of plant origin, and it is therefore a material contributable to control of global warming and can be substituted for petroleum-derived resins currently in use.

## Claims

1. A cellulose derivative, wherein at least a part of the hydrogen atoms of hydroxyl groups in a cellulose is substituted with a hydrocarbyl group ranging in a carbon number from 1 to 7 and with a branched aliphatic acyl group ranging in a carbon number from 7 to 9.

2. A cellulose derivative, wherein at least a part of the hydrogen atoms of hydroxyl groups in a cellulose is substituted with a methyl group and with a branched aliphatic acyl group ranging in a carbon number from 4 to 11, wherein a degree of substitution of the aliphatic acyl group is from 0.3 to 1.5.

3. The cellulose derivative as described in claim 1, wherein the hydrocarbyl group is a methyl group or an ethyl group.

4. The cellulose derivative as described in claim 1, wherein the hydrocarbyl group is methyl groups.

5. The cellulose derivative as described in claim 1, wherein the degree of substitution of the aliphatic acyl group is from 0.3 to 1.5.

6. A cellulose resin composition comprising a cellulose derivative as described in claim 1 or 2.

7. The cellulose resin composition as described in claim 6, which further comprises an inorganic salt comprising an alkali metal or an alkaline earth metal.

8. The cellulose resin composition as described in claim 7, wherein the inorganic salt comprising an alkali metal or an alkaline earth metal is an inorganic salt comprising a calcium or a magnesium.

9. The cellulose resin composition as described in claim 7, wherein the inorganic salt comprising an alkali metal or an alkaline earth metal is any of a calcium carbonate, a magnesium silicate and a magnesium hydroxide.

10. The cellulose resin composition as described in claim 7, wherein the inorganic salt comprising an alkali metal or an alkaline earth metal has a content of 0.1 to 50 mass %.

11. A molded matter which is obtainable by molding a cellulose derivative as described in claim 1 or 2 or a cellulose resin composition as described in claim 6.

12. An electrical and electronic equipment housing which is formed of the molded matter as described in claim 11.

13. A method of producing a cellulose derivative as described in claim 1 or 2, comprising a process in which cellulose ether is made to react with an acid chloride or an acid anhydride in the presence of a base.

14. A method of making molded matter, comprising a process of heating and molding a cellulose derivative as described in claim 1 or 2 or a cellulose resin composition as described in claim 6.

## Patentansprüche

1. Cellulosederivat, wobei wenigstens ein Teil der Wasserstoffatome der Hydroxylgruppen in einer Cellulose mit einer Hydrocarbylgruppe, welche eine Kohlenstoffanzahl im Bereich von 1 bis 7 aufweist, und mit einer verzweigten aliphatischen Acylgruppe, welche eine Kohlenstoffanzahl im Bereich von 7 bis 9 aufweist, substituiert ist.

2. Cellulosederivat, wobei wenigstens ein Teil der Wasserstoffatome der Hydroxylgruppen in einer Cellulose mit einer Methylgruppe und mit einer verzweigten aliphatischen Acylgruppe, welche eine Kohlenstoffanzahl im Bereich von 4 bis 11 aufweist, substituiert ist, wobei der Substitutionsgrad der aliphatischen Acylgruppe von 0,3 bis 1,5 ist.

3. Das Cellulosederivat wie in Anspruch 1 beschrieben, wobei die Hydrocarbylgruppe eine Methylgruppe oder eine Ethylgruppe ist.

4. Das Cellulosederivat wie in Anspruch 1 beschrieben, wobei die Hydrocarbylgruppe eine Methylgruppe ist.

5. Das Cellulosederivat wie in Anspruch 1 beschrieben, wobei der Substitutionsgrad der aliphatischen Acylgruppe von 0,3 bis 1,5 ist.

6. Celluloseharzzusammensetzung, umfassend ein Cellulosederivat wie in Anspruch 1 oder 2 beschrieben.

7. Die Celluloseharzzusammensetzung wie in Anspruch 6 beschrieben, welche weiterhin ein anorganisches Salz, umfassend ein Alkalimetall oder ein Erdalkalimetall, umfasst.

8. Die Celluloseharzzusammensetzung wie in Anspruch 7 beschrieben, wobei das anorganische Salz, welches ein Alkalimetall oder ein Erdalkalimetall umfasst, ein anorganisches Salz ist, welches Calcium oder Magnesium umfasst.

9. Die Celluloseharzzusammensetzung wie in Anspruch 7 beschrieben, wobei das anorganische Salz, welches ein Alkalimetall oder ein Erdalkalimetall umfasst, eines von Calciumcarbonat, Magnesiumsilicat und Magnesiumhydroxid ist.

10. Die Celluloseharzzusammensetzung wie in Anspruch 7 beschrieben, wobei das anorganische Salz, welches ein Alkalimetall oder ein Erdalkalimetall umfasst, einen Gehalt von 0,1 bis 50 Massen% hat.

11. Formkörper, welcher erhältlich ist durch Formen eines Cellulosederivats wie in Anspruch 1 oder 2 beschrieben, oder einer Celluloseharzzusammensetzung wie in Anspruch 6 beschrieben.

12. Gehäuse für elektrische und elektronische Geräte, welches aus dem Formkörper wie in Anspruch 11 beschrieben, geformt ist.

13. Verfahren zum Herstellen eines Cellulosederivats wie in Anspruch 1 oder 2 beschrieben, umfassend einen Vorgang, in welchem Celluloseether veranlasst wird, mit einem Säurechlorid oder einem Säureanhydrid in der Gegenwart einer Base zu reagieren.

14. Verfahren zum Herstellen eines Formkörpers, umfassend einen Vorgang des Erhitzens und Formens eines Cellulosederivats wie in Anspruch 1 oder 2 beschrieben oder einer Celluloseharzzusammensetzung wie in Anspruch 6 beschrieben.

## Revendications

1. Dérivé de cellulose, dans lequel au moins une partie des atomes d'hydrogène des groupes hydroxyles d'une cellulose sont substitués par un groupe hydrocarbyle dont le nombre d'atome de carbones est situé dans la plage de 1 à 7 et par un groupe acyle aliphatique ramifié dont le nombre d'atome de carbones est situé dans la plage de 7 à 9.

2. Dérivé de cellulose, dans lequel au moins une partie des atomes d'hydrogène des groupes hydroxyles d'une cellulose sont substitués par un groupe méthyle et par un groupe acyle aliphatique ramifié dont le nombre d'atome de carbones est situé dans la plage de 4 à 11, dans lequel le degré de substitution du groupe acyle aliphatique est de 0,3 à 1,5.

3. Dérivé de cellulose selon la revendication 1, dans lequel le groupe hydrocarbyle est un groupe méthyle ou un groupe éthyle.

4. Dérivé de cellulose selon la revendication 1, dans lequel le groupe hydrocarbyle est constitué de groupes méthyles.

5. Dérivé de cellulose selon la revendication 1, dans lequel le degré de substitution du groupe acyle aliphatique est de 0,3 à 1,5.

6. Composition de résine de cellulose comprenant un dérivé de cellulose selon la revendication 1 ou 2.

7. Composition de résine de cellulose selon la revendication 6 qui comprend en outre un sel inorganique comprenant un métal alcalin ou un métal alcalino-terreux.

8. Composition de résine de cellulose selon la revendication 7, dans laquelle le sel inorganique comprenant un métal alcalin ou un métal alcalino-terreux est un sel inorganique comprenant du calcium ou du magnésium.

9. Composition de résine de cellulose selon la revendication 7, dans laquelle le sel inorganique comprenant un métal alcalin ou un métal alcalino-terreux est l'un quelconque parmi un carbonate de calcium, un silicate de magnésium et un hydroxyde de magnésium.

10. Composition de résine de cellulose selon la revendication 7, dans laquelle le sel inorganique comprenant un métal alcalin ou un métal alcalino-terreux a une teneur de 0,1 à 50 % en masse.

11. Matière moulée qui peut être obtenue en moulant un dérivé de cellulose selon la revendication 1 ou 2 ou une composition de résine de cellulose selon la revendication 6.

12. Boîtier pour équipement électrique et électronique qui est fabriqué à partir de la matière moulée selon la revendication 11.

13. Procédé de fabrication d'un dérivé de cellulose selon la revendication 1 ou 2, comprenant un procédé dans lequel de l'éther de cellulose est mis à réagir avec un chlorure d'acide ou un anhydride d'acide en présence d'une base.

14. Procédé de fabrication d'une matière moulée, comprenant un procédé de chauffage et de moulage d'un dérivé de cellulose selon la revendication 1 ou 2 ou d'une composition de résine de cellulose selon la revendication 6.
